# EUROPEAN PATENT APPLICATION

(11) **EP 4 748 616 A1**
(43) Date of publication of application: **27.05.2026**
(21) Application number: 25216579.0
(22) Date of filing: 18.11.2025
(51) Int. Cl.: B60L 1/00, B60L 58/20, H02J 1/082

(54) **ELECTRIC SYSTEM OF AN ELECTRIC ROAD VEHICLE**

(30) Priority: 20.11.2024 IT 202400026172
(71) Applicant: FERRARI S.p.A., 41100 Modena (IT)
(72) Inventor: AGNELLO, Giuseppe, 41100 MODENA (IT); BETRO', Roberto, 41100 MODENA (IT); LO CALZO, Giovanni, 41100 MODENA (IT); SIANI, Aniello, 41100 MODENA (IT); SITTA, Ugo, 41100 MODENA (IT); ZANELLA, Daniele, 41100 MODENA (IT)
(74) Representative: Studio Torta S.p.A.

(57) **Abstract**

The electric system (16) of a road vehicle (1) and having: a high-voltage electrical circuit (17) provided with a storage system (14) and with at least one electric machine (8) designed to generate electrical energy; a low-voltage electrical circuit (18) provided with at least one continuous electrical load which must be powered even when the vehicle (1) is in a parking condition and at least one occasional electrical load which must not be powered even when the vehicle (1) is in the parking condition; a main electronic DC-DC power converter (27) which connects the low-voltage electrical circuit (18) and the high-voltage electrical circuit (17) to power all electrical loads; and secondary electronic DC-DC power converter (28) which is completely separate from and independent of the main electronic DC-DC power converter (27) and connects the low-voltage electrical circuit (18) and the high-voltage electrical circuit (17) to one another so as to power only and exclusively the continuous electrical load.

## Description

### CROSS-REFERENCE TO RELATED APPLICATIONS

This patent application claims priority from Italian patent application no. 102024000026172 filed on November 20, 2024, the entire disclosure of which is incorporated herein by reference.

### FIELD OF THE ART

The present invention relates to an electric system of an electric road vehicle.

### PRIOR ART

An electric road vehicle comprises at least one electric machine that is electrically connected to an electrical energy storage system and is mechanically connected to the driving wheels.

The electric system of an electric vehicle comprises a high-voltage electrical circuit (in a relative sense, it could also have a nominal voltage of only 48 Volts) and high power to which the electric machine is connected; the high-voltage electrical circuit comprises a storage device (provided with at least one pack of chemical batteries), and an electronic converter of direct-to-alternate bidirectional power which on the direct current side is connected to the storage device and on the alternating current side is connected to the electric machine and has the function of driving the electric machine itself.

The electric system of an electric vehicle also comprises a low-voltage electrical circuit (having a nominal voltage of 12 Volts) and low power to which all the auxiliary electrical services are connected (e.g. the control units, the infotainment system, the anti-theft system, the cabin lighting system, the external lights...). Generally, the low-voltage electrical circuit is provided with a storage device of its own (provided with a single relatively heavy and bulky chemical battery). In addition, an electronic DC-DC power converter is generally provided which connects the low-voltage electrical circuit and the high-voltage electrical circuit to one another to transfer electrical energy from the high-voltage electrical circuit to the low-voltage electrical circuit (or even vice versa, if the on-board management strategies so provide); that is, the electrical energy provided by the high-voltage electrical circuit is used both to recharge the storage device of the low-voltage electrical circuit and to power the electrical loads of the low-voltage electrical circuit.

In order to try to reduce the weight and footprint of the low-voltage electrical circuit, it has been proposed to eliminate the storage device of the low-voltage electrical circuit and to increase the electrical power that can be delivered by the electronic DC-DC power converter; however, by eliminating the storage device of the low-voltage electrical circuit, it is necessary to always keep the electronic DC-DC power converter active even when the vehicle is parked in order to provide the necessary electrical power to the electrical loads which must always be powered (typically the anti-theft system that is always active when the vehicle is parked, the infotainment system that could communicate remotely with the vehicle owner or with a remote assistance centre when the vehicle is parked, and above all the control units necessary for starting the vehicle which if they were completely switched off they would no longer be able to start the parked vehicle allowing, for example, doors to be opened). As a result, the electronic DC-DC power converter is continuously stressed (i.e. it is in operation 24 hours a day, 7 days a week) and therefore requires more onerous design to be able to withstand continuous working for an adequately long period (taking into account that the minimum life of a vehicle is at least ten years). In addition, the electronic DC-DC power converter must operate for a very long time (the vehicles, especially the *"recreational"* vehicles such as high-performance cars, remain parked for most of their lives) with low energy efficiency, as the electronic DC-DC power converter is sized so as to deliver a nominal power of a few kW and is far from maximum energy efficiency when it must deliver a power of a few Watts.

Patent application US2024116380A1 describes a vehicle provided with a solar recharging system comprising: a solar panel, a traction battery used to start the vehicle, and an auxiliary battery for supplying electric power to an on-board device functioning during parking.

Patent application EP3730341A1 describes an electric system of a road vehicle and comprising: a high-voltage electrical circuit provided with a first storage system; a low-voltage electrical circuit provided with a plurality of electrical loads; an electronic DC-DC power converter which connects the low-voltage electrical circuit and the high-voltage electrical circuit to one another and integrates therein a second storage system connected to the low-voltage output; and a control unit that is configured, only when the vehicle is parked, to detect a state of charge of the second storage system and to activate the electronic DC-DC power converter only when the state of charge of the second storage system is less than a charge threshold for charging the second storage system.

### DISCLOSURE OF THE INVENTION

Aim of the present invention is to provide an electric system of an electric road vehicle, which electric system is free of the drawbacks described above and is at the same time easy and economical to implement.

According to the present invention there is provided an electric system of an electric road vehicle as claimed in the appended claims.

The claims describe preferred embodiments of the present invention forming an integral part of the present disclosure.

### BRIEF DESCRIPTION OF THE DRAWINGS

The present invention will now be described with reference to the attached drawings, which show a non-limiting embodiment thereof, wherein:
- Figure 1 is a schematic and plan view of a road vehicle with hybrid propulsion (i.e. both thermal and electric) and provided with an electric system realized in accordance with the present invention; and
- Figure 2 is a schematic view of the electric system of the road vehicle of Figure 1 which is realized in accordance with the present invention.

### PREFERRED EMBODIMENTS OF THE INVENTION

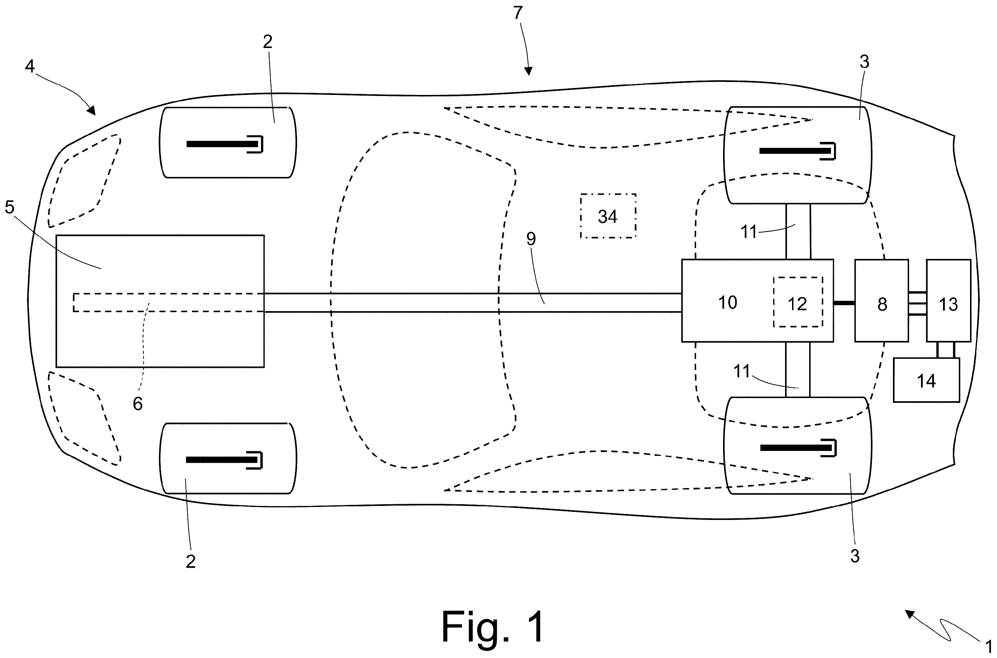

In Figure 1, reference numeral 1 denotes as a whole a hybrid road vehicle provided with two front wheels 2 and two rear driving wheels 3, which receive the driving torque from a hybrid powertrain system 4.

The hybrid powertrain system 4 comprises an internal combustion engine 5 arranged in a front position and provided with a drive shaft 6, a transmission 7 which transmits the driving torque generated by the internal combustion engine 5 to the rear driving wheels 3, and (at least) an electric machine 8 which is mechanically connected to the transmission 7 and is reversible (i.e. it can operate both as an electric motor absorbing electric energy and generating a driving mechanical torque, and as an electric generator absorbing mechanical energy and generating electric energy).

The transmission 7 comprises a transmission shaft 9 which on the one hand is angularly integral with the drive shaft 6 and on the other hand is mechanically connected to a gearbox 10, which is arranged in a rearward position and transmits motion to the rear driving wheels 3 by means of two half-axles 11 which receive motion from a differential 12.

The electric machine 8 is mechanically connected to the gearbox 10 and is driven by an electronic AC/DC power converter 13 (i.e. an *"inverter"*) which is connected to an electrical energy storage system 14 provided with chemical batteries. In this application, the electronic AC/DC power converter 13 is bidirectional and comprises a direct current side connected to the storage system 14 and a three-phase alternating current side which is connected to the electric machine 8.

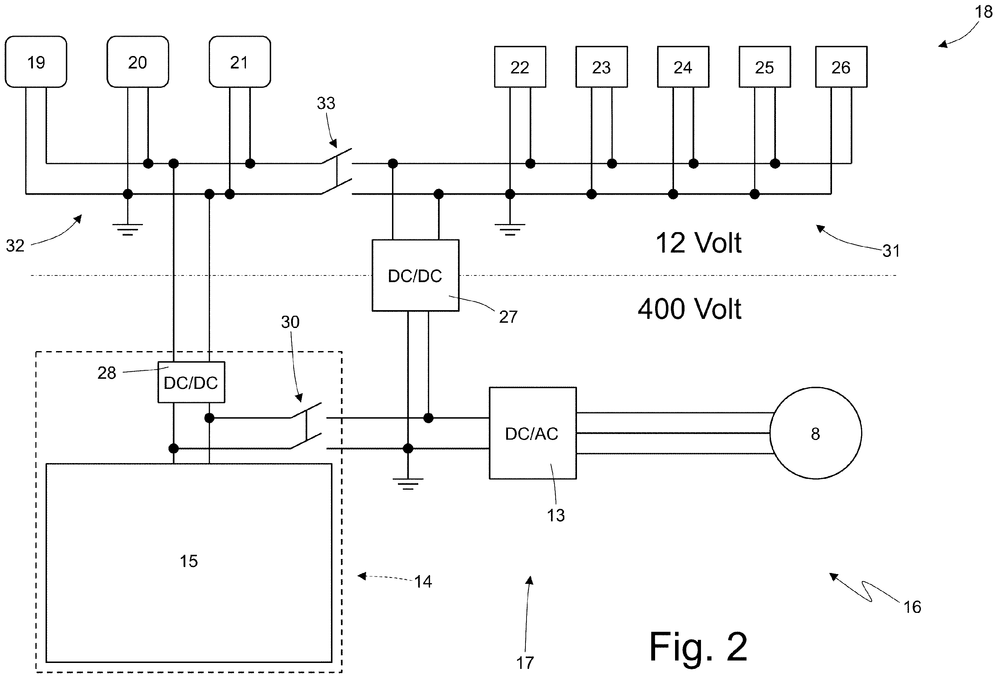

According to what is shown in Figure 2, the storage system 14 comprises a pack 15 of chemical batteries composed of a plurality of chemical batteries connected to one another in series and/or parallel; each chemical battery comprises respective electrochemical cells that are adapted to convert the stored chemical energy into electrical energy and vice versa.

According to what is shown in Figure 2, the road vehicle 1 is provided with an electric system 16, which comprises a high voltage (in relative sense) and high power electrical circuit 17 having a nominal voltage of 400 Volts and a low voltage and low power electrical circuit 18 having a nominal voltage of 12 Volts. It is important to point out that the high-voltage electrical circuit 17 is called *"high voltage"* as it has a nominal voltage (400 Volts) greater than the nominal voltage (12 Volts) of the low-voltage electrical circuit 18, i.e. the definition of *"high voltage"* is to be understood as relating only to the electric system 16 and with reference to the low-voltage electrical circuit 18 having a nominal voltage of 12 Volts. The nominal voltage of the low-voltage electrical circuit 18 is generally always 12 Volts, as this value constitutes the only worldwide standard for automotive applications; instead, the nominal voltage of the high-voltage electrical circuit 17 could be different from 400 Volts (generally higher than 400 Volts up to reaching several hundred Volts or even a thousand Volts but also lower than 400 Volts up to a lower limit of 48 Volts).

The high-voltage electrical circuit 17 comprises the storage system 14 and the electronic AC/DC power converter 13 which on one side is connected to the storage system 14 and on the opposite side is connected to the electric machine 8 (i.e. to the stator windings of the electric machine 8).

The low-voltage electrical circuit 18 comprises a plurality of electrical loads, each of which is only adapted to absorb electrical energy for its operation (i.e. none of these electrical loads is capable of generating electrical energy). In particular, the electrical loads comprise continuous (high priority) electrical loads that generally have a modest power absorption and must be constantly powered regardless of the use of the road vehicle 1 (i.e. they must be constantly powered even when the road vehicle 1 is parked) and occasional (low priority) electrical loads that must be powered only when the road vehicle 1 is used and often only for limited periods of time.

The continuous (high priority) electrical loads comprise, for example, an alarm system 19, an infotainment system 20, and (at least) an electronic control unit 21 having the function of starting the vehicle 1 (i.e. the passage of the vehicle 1 from a parking state to an operating state that allows, among other things, the doors to be opened); of course, further continuous electrical loads other than those mentioned above can be provided, such as electronic control units which, in the event of an interruption of the power supply, generate an error message upon restarting (i.e. electronic control units which, although they are in standby and have very low consumption, still require to be powered continuously under penalty of generating ignition errors). Instead, the occasional electrical loads comprise, for example, a lighting system 22 of the passenger compartment, external lights 23, an air conditioning system 24, electronic control units 25, electric actuators 26 (for example, active suspensions or rear steering wheels); of course, further occasional electrical loads other than those mentioned above can be provided.

The electric system 16 comprises a main electronic DC-DC power converter 27 which connects the low-voltage electrical circuit 18 and the high-voltage electrical circuit 17 to one another to transfer electrical energy from the high-voltage electrical circuit 17 to the low-voltage electrical circuit 18 (or even vice versa, if the on-board management strategies so provide). The main electronic DC-DC power converter 27 comprises a high-voltage input (i.e. having a nominal voltage of 400 Volts) which is connected to the storage system 14 and a low-voltage output 27 (i.e. having a nominal voltage of 12 Volts) which is connected to the electrical loads of the low-voltage electrical circuit 18.

The electric system 16 comprises a secondary electronic DC-DC power converter 28 which connects the low-voltage electrical circuit 18 and the high-voltage electrical circuit 17 to one another to transfer electrical energy from the high-voltage electrical circuit 17 to the low-voltage electrical circuit 18. The secondary electronic DC-DC power converter 28 comprises a high-voltage input (i.e. having a nominal voltage of 400 Volts) which is connected to the storage system 14 and a low-voltage output 27 (i.e. having a nominal voltage of 12 Volts) which is connected to the electrical loads of the low-voltage electrical circuit 18 and to which they are connected.

The two electronic DC-DC power converters 27 and 28 are connected to one another substantially in parallel, i.e. the two inputs of the electronic DC-DC power converters 27 and 28 are both connected to the battery pack 15 of the storage system 14 and the two outputs of the electronic DC-DC power converters 27 and 28 are both connected to the low-voltage electrical circuit 18.

The main electronic DC-DC power converter 27 has a nominal power significantly higher than a nominal power of the secondary electronic DC-DC power converter 28; i.e. the nominal power of the main electronic DC-DC power converter 27 is at least 60-80 times (and preferably at least 100 times) the nominal power of the secondary electronic DC-DC power converter 28. By way of example, the nominal power of the main electronic DC-DC power converter 27 could be 3 KW while the nominal power of the secondary electronic DC-DC power converter 28 could be 30 W.

The nominal power of the main electronic DC-DC power converter 27 is sized so as to allow the main electronic DC-DC power converter 27 to operate, i.e. to keep switched on and operational, all the electrical loads of the low-voltage electrical circuit 18 when they operate in driving condition (i.e. when the vehicle 1 is in motion and therefore the electrical loads can be at full capacity operating in nominal conditions and absorbing the maximum electrical power they can absorb). Instead, the nominal power of the secondary electronic DC-DC power converter 28 is sized so as to allow the secondary electronic DC-DC power converter 28 to operate, i.e. to keep switched on and operational only the continuous (high priority) electrical loads and only when they operate in a parking condition (i.e. when the vehicle 1 is parked and switched off and therefore the continuous electrical loads are in a stand-by condition that greatly limits their absorption of electrical power).

The storage system 14 comprises an insulating container 29 which encloses both the battery pack 15 and the secondary electronic DC-DC power converter 28; i.e. the secondary electronic DC-DC power converter 28 is located on the inside of the container 29 of the storage system 14. It is important to observe that the secondary electronic DC-DC power converter 28 is decidedly small (as mentioned above it could have a nominal power of 20-30 W) and therefore can easily find a place inside the container 29 of the storage system 14. Thanks to the fact of being arranged inside the container 29 of the storage system 14, the secondary electronic DC-DC power converter 28 can remain connected to the battery pack 15 even when the vehicle 1 is switched off. Instead, a disconnecting device 30 is provided which is arranged on the inside of the container 29 of the storage system 14 and is configured to isolate the electronic power converters 13 and 27 from the battery pack 15 when the vehicle 1 is switched off (parked); in fact, the regulations provide that there can be no live parts in the high-voltage electrical circuit 17 (obviously outside the container 29 of the storage system 14) when the vehicle 1 is switched off (parked).

In other words, the insulating container 29 of the storage system 14 encloses both the battery pack 15 and the secondary electronic DC-DC power converter 28 which is directly connected to the battery pack 15 in a non-interruptible manner (i.e. without the interposition of a disconnecting device); instead, the main electronic DC-DC power converter 27 is located on the outside of the container 29 of the storage system 14 and is connected to the battery pack 15 in a non-interruptible manner (i.e. by means of the disconnecting device 30).

It is important to observe that the low-voltage electrical circuit 18 completely lacks an external electrical energy storage system of its own, which is independent of the electronic DC-DC power converters 27 and 28 (which may comprise capacitors, possibly also supercapacitors, necessary for their operation); that is, outside the electronic DC-DC power converters 27 (which may comprise capacitors) the low-voltage electrical circuit 18 does not provide for any electrical energy storage system and in particular does not provide for any type of chemical battery. In other words, the low-voltage electrical circuit 18 completely lacks chemical batteries and therefore the electric system 16 has only electrical energy storage systems with high-voltage chemical batteries (i.e. connected to the high-voltage electrical circuit 17).

The low-voltage electrical circuit 18 comprises a main section 31 to which all and only the occasional electrical loads are connected and is directly connected to the output of the main electronic DC-DC power converter 27; furthermore, the low-voltage electrical circuit 18 comprises a secondary section 32 to which all and only the continuous (high-priority) electrical loads are connected and is directly connected to the output of the secondary electronic DC-DC power converter 28. The two sections 31 and 32 are connected to one another by a disconnecting device 33 which is closed to establish an electrical connection between the two sections 31 and 32 and is opened to isolate the secondary section 32 from the main section 31.

According to a preferred, but non-limiting, embodiment, an electric starter motor of the internal combustion engine 5 is not connected to the low-voltage electric circuit 18 since the internal combustion engine 5 is started by the electric machine 8 which receives the power supply directly from the high-voltage electric circuit 17.

The vehicle 1 comprises a control unit 34 (schematically shown in Figure 1) which is in charge of the operation of the electric system 16.

When the road vehicle 1 is used (i.e. is in more or less continuous movement), the electric machine 8 is also used as a generator (for example, but not only, in the slowdown phase) to generate electric energy that is stored in the storage system 14 of the high-voltage electric circuit 17. Furthermore, when the road vehicle 1 is used (i.e. it is in more or less continuous movement) the main electronic DC-DC power converter 27 is constantly in operation (i.e. it is used in a continuous manner, therefore without pauses or interruptions of the conversion which is constantly active) to transfer electrical energy from the high-voltage electrical circuit 17 to the low-voltage electrical circuit 18; this electrical energy transferred to the low-voltage electrical circuit 18 is used to power and operate (when necessary) all the electrical loads of the low-voltage electrical circuit 18. Accordingly, when the road vehicle 1 is used (i.e. is in more or less continuous movement), the control unit 34 keeps the disconnecting device 33 closed (in addition, of course, to keeping the disconnecting device 30 closed) such that the secondary section 32 is connected to the main section 31 (through the disconnecting device 33) and thus the main electronic DC-DC power converter 27 can also power the continuous (high priority) electrical loads that are connected to the secondary section 32. When the road vehicle 1 is used (i.e. it is in more or less continuous movement), the secondary electronic DC-DC power converter 28 is not used (i.e. it is kept switched off), as all electrical loads are powered only by the main electronic DC-DC power converter 27.

When the road vehicle 1 is not used, that is, it is parked *"with the key off"* (in other words it is switched off in parking condition with the powertrain system 4 inactive and the doors closed), the control unit 34 opens the disconnecting device 30 (disconnecting voltage from the high-voltage electrical circuit 17 for safety reasons) and also opens the disconnecting device 33 to isolate the secondary section 32 from the main section 31; in these conditions, the main electronic DC-DC power converter 27 is necessarily switched off (as it cannot receive electrical energy from the storage system 14) while the secondary electronic DC-DC power converter 28 is constantly in operation (i.e. it is used in a continuous manner, therefore without pauses or interruptions of the conversion that is constantly active) to power and operate the continuous (high priority) electrical loads that are connected to the secondary section 32 and operate in a parking condition (i.e. the continuous electrical loads are in a stand-by condition which greatly limits their electrical power absorption).

According to a different embodiment not shown, the disconnecting device 33 is not present and therefore the two sections 31 and 32 of the low-voltage electrical circuit 18 are always connected to one another. The disconnecting device 33 is useful but not indispensable, as it allows to reduce the consumption of electrical energy when the road vehicle 1 is not used and therefore the disconnecting device 33 has the sole function of increasing energy efficiency. In fact, the disconnecting device 33 allows to isolate the secondary section 32 from the main section 31 when the secondary section 32 is powered by the secondary electronic DC-DC power converter 28 avoiding applying electrical voltage to the occasional electrical loads (strictly switched off in parking condition) connected to the main section 31 (the occasional electrical loads even if switched off still absorb some electrical energy if they are powered). In other words, the opening of the disconnecting device 33 when the road vehicle 1 is not used allows to avoid consuming (unnecessarily) electrical energy as inevitably occurs when the occasional electrical loads (even if deactivated) are still under voltage and it is also avoided subjecting the occasional electrical loads to a continuous unnecessary electrical stress that in the long run (i.e. over the years) could also cause premature aging (especially for electronic control units). In any case, the secondary electronic DC-DC power converter 28 may apply an electrical voltage to the occasional electrical loads that are switched off, but is absolutely unable to operate the occasional electrical loads as it is unable to provide the electrical power necessary for the operation of the occasional electrical loads.

From the above and from what is shown in the figures, it is evident that the main electronic DC-DC power converter 27 and the secondary electronic DC-DC power converter 28 have the same nominal voltage both on the high voltage side and on the low voltage side to receive both, at different times, electrical energy from the same storage system 14 and supply both, at different times, at the same continuous (high priority) electrical loads.

According to a different embodiment, the road vehicle 1 does not have a hybrid drive but has an electric-only drive; i.e. the powertrain system 4 does not comprise the internal combustion engine 5 and comprises only electric machines.

The embodiments described herein may be combined with each other.

The electric system 16 described above has numerous advantages.

Firstly, the electric system 16 described above makes it possible to significantly reduce the encumbrance and weight of the low-voltage electrical circuit 18 thanks to the absence of the traditional chemical battery.

In addition, the electric system 16 described above operates the conversion of electrical energy with the electronic DC-DC power converters 27 and 28 always in conditions of high energy efficiency, since the electronic DC-DC power converters 27 and 28 are always used to deliver an electrical power of the same order of magnitude as their nominal electrical power. When the vehicle 1 is used (i.e. is switched on), the only main electronic DC-DC power converter 27 is in operation which powers all electrical loads that are fully operational, while when the vehicle 1 is not used (i.e. is switched off and parked), the sole secondary electronic DC-DC power converter 28 is in operation which powers only the occasional electrical loads that operate in a parking condition (i.e. when the vehicle 1 is parked and switched off the continuous electrical loads are in a stand-by condition that greatly limits their electrical power absorption).

Finally, the electric system 16 described above is of relatively low cost and complexity as it is entirely composed of commercial components.

### LIST OF REFERENCE NUMBERS OF THE FIGURES

- 1: vehicle
- 2: front wheels
- 3: rear wheels
- 4: powertrain system
- 5: engine
- 6: drive shaft
- 7: transmission
- 8: electric machine
- 9: transmission shaft
- 10: mechanical gearbox
- 11: half-axles
- 12: differential
- 13: electronic AC/DC power converter
- 14: storage system
- 15: pack of chemical batteries
- 16: electric system
- 17: high-voltage electrical circuit
- 18: low-voltage electrical circuit
- 19: alarm system
- 20: infotainment system
- 21: electronic control unit
- 22: lighting system of the passenger compartment
- 23: external lights
- 24: air conditioning system
- 25: electronic control unit
- 26: electric actuators
- 27: electronic DC/DC power converter
- 28: electronic DC/DC power converter
- 29: container
- 30: disconnecting device
- 31: main section
- 32: secondary section
- 33: disconnecting device
- 34: control unit

## Claims

1. An electric system (16) of a road vehicle (1) and comprising:
a high-voltage electrical circuit (17) provided with a first storage system (14) and with at least one electric machine (8) designed to generate electrical energy;
a low-voltage electrical circuit (18) provided with at least one continuous electrical load, which must be powered even when the vehicle (1) is in a parking condition, and at least one occasional electrical load, which must not be powered when the vehicle (1) is in a parking condition;
a main electronic DC-DC power converter (27) which connects the low-voltage electrical circuit (18) and the high-voltage electrical circuit (17) to one another to transfer electrical energy from the high-voltage electrical circuit (17) to the low-voltage electrical circuit (18) so as to power all electrical loads;
a secondary electronic DC-DC power converter (28) which connects the low-voltage electrical circuit (18) and the high-voltage electrical circuit (17) to one another to transfer electrical energy from the high-voltage electrical circuit (17) to the low-voltage electrical circuit (18); and
a control unit (34);
the electric system (16) is **characterized in that:**
the secondary electronic DC-DC power converter (28) is completely separate from and independent of the main electronic DC-DC power converter (27) and is configured to operate only and exclusively the continuous electrical load and only when the vehicle (1) is in the parking condition;
a nominal power of the secondary electronic DC-DC power converter (28) is sized so as to allow the secondary electronic DC-DC power converter (28) to operate, i.e. to keep switched on, only and exclusively the continuous electrical load and only when it operates in the parking condition; and
the control unit (34) is configured to: operate all electrical loads using in a continuous manner, i.e. without conversion interruptions, only the main electronic DC-DC power converter (27) when the vehicle (1) is in a driving condition, and operate the sole continuous electrical load using in a continuous manner, i.e. without conversion interruptions, only the secondary electronic DC-DC power converter (28) without operating the occasional electrical load when the vehicle (1) is in the parking condition.

2. The electric system (16) according to claim 1, wherein the low-voltage electrical circuit (18) comprises:
a main section (31), to which the sole occasional electrical load is connected, and which is directly connected to an output of the main electronic DC-DC power converter (27) ;
a secondary section (32), to which the sole continuous electrical load is connected, and which is directly connected to an output of the secondary electronic DC-DC power converter (28).

3. The electric system (16) according to claim 2, wherein the two sections (31, 32) are connected to one another in a permanent and non-interruptible manner.

4. The electric system (16) according to claim 2, wherein the two sections (31, 32) are connected to one another by a first disconnecting device (33) which can be closed to establish an electrical connection between the two sections (31, 32) and can be opened to isolate the secondary section (32) from the main section (31).

5. The electric system (16) according to claim 4, wherein the control unit (34) is configured to open the first disconnecting device (33) when and only when the vehicle (1) is in the parking condition.

6. The electric system (16) according to one of claims 1 to 5, wherein the main electronic DC-DC power converter (27) has a nominal power that is at least 60-80 times, and preferably at least 100 times, a nominal power of the secondary electronic DC-DC power converter (28).

7. The electric system (16) according to one of claims 1 to 6, wherein a nominal power of the main electronic DC-DC power converter (27) is sized so as to allow the main electronic DC-DC power converter (27) to operate, i.e. to keep switched on, all the electrical loads of the low-voltage electrical circuit (18) when they operate in a driving condition.

8. The electric system (16) according to one of claims 1 to 7, wherein the storage system (14) comprises an insulating container (29), which encloses both a battery pack (15) and the secondary electronic DC-DC power converter (28) which is directly connected to the battery pack (15) in a non-interruptible manner.

9. The electric system (16) according to claim 8, wherein the main electronic DC-DC power converter (27) is located on the outside of the container (29) of the storage system (14) and is connected to the battery pack (15) by means of a second disconnecting device (30).

10. The electric system (16) according to one of claims 1 to 9, wherein the low-voltage electrical circuit (18) completely lacks an external electrical energy storage system of its own, which is independent of the electronic DC-DC power converters (27, 28).

11. The electric system (16) according to one of claims 1 to 10, wherein the low-voltage electrical circuit (18) completely lacks any chemical batteries.

12. The electric system (16) according to one of claims 1 to 11, wherein the electric system (16) comprises only electrical energy storage systems with high-voltage chemical batteries i.e. connected to the high-voltage electrical circuit (17).

13. The electric system (16) according to one of claims 1 to 12, wherein the continuous electrical load comprises at least one electronic control unit (21) having the function of starting the vehicle (1).

14. The electric system (16) according to one of claims 1 to 13, wherein the main electronic DC-DC power converter (27) and the secondary electronic DC-DC power converter (28) have the same nominal voltage both on the high voltage side and on the low voltage side to receive both, at different times, electrical energy from the same storage system (14) and power both, at different times, the same continuous electrical load.
